# EUROPÄISCHE PATENTSCHRIFT

(11) **EP 1 427 665 B1**
(45) Veröffentlichungstag und Bekanntmachung des Hinweises auf die Patenterteilung: **09.11.2005**
(21) Anmeldenummer: 02777172.4
(22) Anmeldetag: 20.09.2002
(51) Int. Cl.: B67B 3/26

(54) **VERFAHREN ZUR KONTROLLE VON VERSCHLÜSSEN AUF GEFÄSSEN**
METHOD FOR INSPECTING CLOSURES ON CONTAINERS
PROCEDE DE CONTROLE DE FERMETURES SUR DES CONTENANTS

(30) Priorität: 20.09.2001 DE 10146449
(43) Veröffentlichungstag der Anmeldung: 16.06.2004
(73) Patentinhaber: KRONES AG, 93068 Neutraubling (DE)
(72) Erfinder: LINDNER, Peter, 93437 Furth im Wald (DE)
(86) Internationale Anmeldenummer: PCT/EP2002/010621
(87) Internationale Veröffentlichungsnummer: WO 2003/024859

(56) Entgegenhaltungen:
- WO-A-97/04887
- DE-A- 19 540 545
- GB-A- 926 195
- NL-C- 75 871
- US-B1- 6 237 418

## Beschreibung

Die Erfindung betrifft ein Verfahren zur optischen Kontrolle von Verschlüssen auf Gefäßen, insbesondere Flaschen oder dgl. Behälter.

Ziel der Erfindung ist die Erkennung von schief oder exzentrisch aufgesetzten Mündungsverschlüssen, die ein zentrisches Deckellogo aufweisen. Bekannte Vorrichtungen zur Verschlußkontrolle, wie sie beispielsweise in DE 195 40 545, WO 97/04887 und GB 926 195 offenbart sind, befinden sich in Flaschenfülllinien der Getränkeindustrie in der Regel im Bereich hinter einer Füll- und Verschließmaschine oder sind in einen Vollflascheninspektor integriert. Bisher waren für diese Aufgabe mehrere Ansichten von einem Mündungsverschluß notwendig, um eine sichere Erkennung von schief sitzenden Verschlüssen gewährleisten zu können.

Der Erfindung liegt die Aufgabe zugrunde, den hierfür erforderlichen Aufwand zu verringern.

Gelöst wird die Aufgabe dadurch, dass zumindest die äußere Kante eines Verschlusses vollumfänglich schräg von oben beleuchtet und eine Aufnahme der Verschlußoberseite senkrecht von oben aufgenommen wird, aus der der erhellt erscheinende äußere Mündungsrand ermittelt und die Lage des Deckellogos relativ zu diesem Mündungsrand überprüft wird, wobei im Falle einer unzulässigen Exzentrizität ein Signal erzeugt wird.

Nachfolgend wird ein Ausführungsbeispiel anhand der Figuren erläutert. Es zeigt:

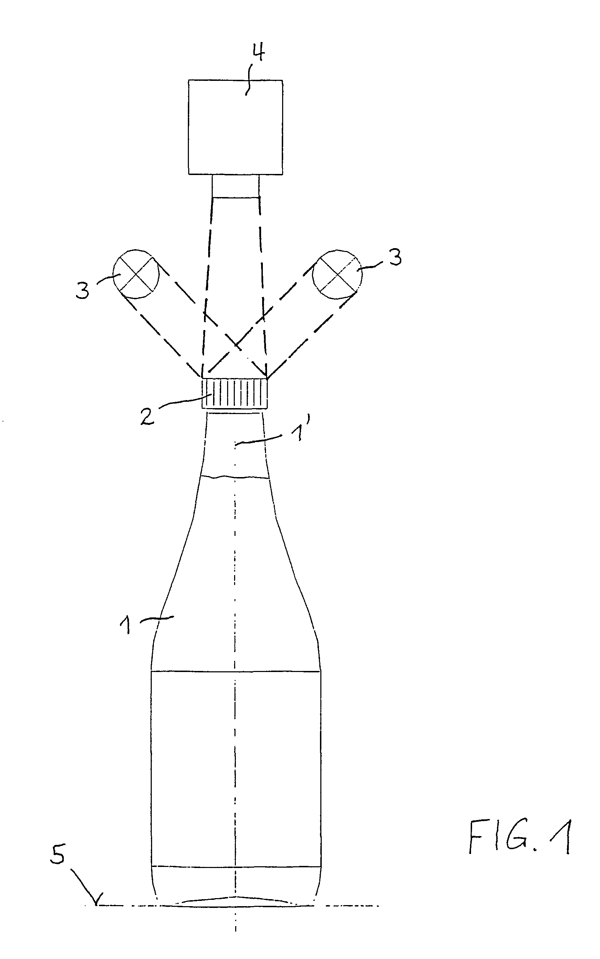

Fig.1 eine Seitenansicht einer Inspektionsvorrichtung und
Fig.2 eine von der Inspektionsvorrichtung nach Fig.1 aufgenommene Abbildung eines Mündungsverschlusses auf einer verschlossenen Getränkeflasche.

Über einem kontinuierlich anteibbaren Förderband 5 befindet sich eine senkrecht zum Förderband nach unten blickend ausgerichtete CCD-Kamera 4 mit einem Bildspeicher und einer Einrichtung (Bildauswertelektronik)zur Auswertung (Analyse) aufgenommener Bilder, sowie zur Erzeugung eines Signals zum Anzeigen und/oder Ausschleusen von Flaschen, die nicht einer vorgebbaren Norm entsprechen.

Konzentrisch zu der optischen Achse der Kamera ist eine kreisringförmige Lichtquelle 3 angeordnet, die beispielsweise aus einer Vielzahl von auf einer nach unten offenen und sich nach außen erweiternden Kegelfläche (Innenfläche) positionierten LEDs bestehen kann. Zweckmäßig sind zur Kamera und Flaschenbewegung synchronisiert gepulst angesteuerte LEDs.

Die Höhe und Geometrie der Lichtquelle 3 ist so gestaltet, dass der Verschluß 2 auf der Mündung einer sich momentan mit ihrer vertikalen Mittelachse 1' koaxial zur optischen Achse unter der Kamera 4 befindenden Flasche 1 vollumfänglich schräg von oben und außen beleuchtbar ist, insbesondere dessen äußerer Rand, der auftreffendes Licht nach oben zur Kamera 4 reflektiert.

Sobald sich die kontinuierlich bewegte Flasche 1 in der gezeigten, koaxialen Stellung unter der Kamera 4 befindet, nimmt diese den Verschluß 2 bei gleichzeitiger Beleuchtung durch die Lichtquelle 3 auf, d.h. von der Verschlußoberseite wird eine Aufnahme gemacht und in dem Bildspeicher der Bildauswertelektronik der Kamera abgelegt. Diese Vorgänge werden in an sich bekannter Weise durch eine Steuerelektronik in Verbindung mit einer nicht dargestellten, vorbeilaufende Flaschen erkennenden Triggerlichtschranke ausgelöst

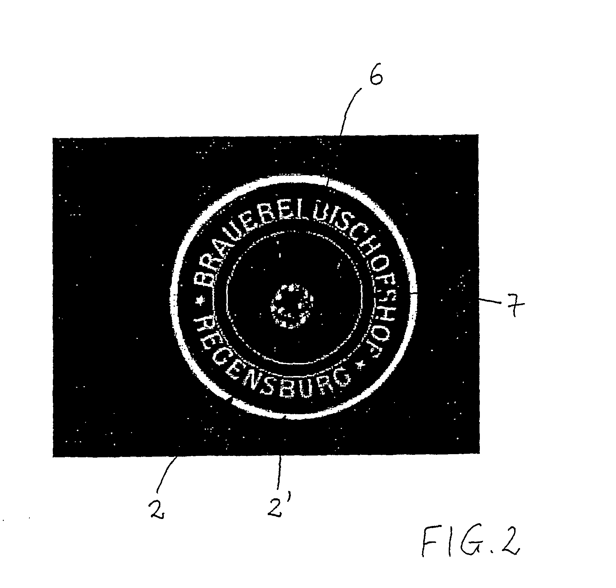

Eine typische Aufnahme eines Kronkorkenverschlusses einer Glasflasche ist in Figur 2 abgebildet. Wie daraus zu erkennen ist, besitzt das Deckellogo dieses Verschlusses einen kreisringförmigen Schriftzug 6, der bei ordnungsgemäßer Lage des Verschlusses 2 konzentrisch zum durch die Lichtreflektion hell erscheinenden äußeren Rand 2' des Verschlusses ausgerichtet sein müsste. Im vorliegenden Fall liegt jedoch eine Exzentrizität vor.

Zur Feststellung einer solchen evtl. auftretenden Abweichung wird auf diesen erhellten Rand 2' durch eine Zentrierungsanalyse der Bildauswertelektronik feinzentriert. Dann wird exakt konzentrisch zu diesem Rand 2' ein kreisringförmiges, zum jeweiligen Deckellogo passendes Auswertgate 7 erzeugt, dessen Außenumfang an den inneren Umfang des Schriftzugs 6 entsprechend angepasst ist. Auf diese Weise lassen sich auch nur geringfügige Abweichungen zuverlässig, z.B. durch eine Abstandsmessung zwischen dem Außenumfang des Auswertgates 7 und dem inneren Umfang des Schriftzugs 6, ermitteln, um dann ggf. ein Ausscheidesignal zu erzeugen, falls ein vorgebbarer Grenzwert an einer bestimmten oder beliebigen Umfangsstelle über- bzw. unterschritten wird.

In Figur 2 weist der äußere Rand des Auswertgates 7 in der 4-Uhr-Position einen Abstand zum inneren Rand des Schriftzugs 6 auf, während der diametral gegenüberliegende Bereich (10-Uhr-Position) des Auswertgates 7 diesen bereits berührt.

Dieses Verfahren ist bei allen Arten von Gefäßverschlüssen, wie Schraub-, Kronenkork- sowie Aufreißverschlüssen anwendbar, sofern diese ein Deckellogo mit einem konzentrisch zur Gefäßmündung angebrachten Dekormerkmal aufweisen, das für diese Art von Auswertung brauchbar ist.

## Patentansprüche

1. Verfahren zur optischen Kontrolle von Verschlüssen auf Gefäßen, **dadurch gekennzeichnet, dass** die äußere Kante eines Verschlusses vollumfänglich schräg von oben beleuchtet und eine Aufnahme der Verschlußoberseite senkrecht von oben aufgenommen wird, aus der der erhellt erscheinende äußere Rand des Verschlusses ermittelt und die Lage eines Deckellogos relativ zu diesem Rand unmittelbar oder mittelbar überprüft wird, wobei im Falle einer unzulässigen Exzentrizität ein Signal erzeugt wird.

2. Verfahren nach Anspruch 1, **dadurch gekennzeichnet, dass** ein zum Rand des Verschlusses konzentrisches Auswertgate bei der Auswertung der Aufnahme erzeugt wird, dessen Form an das jeweilige Deckellogo oder Teilen davon angepasst ist.

3. Verfahren nach Anspruch 2, **dadurch gekennzeichnet, dass** zwischen dem Auswertgate und dem Deckellogo oder Teilen davon, insbesondere einem Schriftzug, eine punktuelle und/oder teilumfängliche und/oder vollumfängliche Abstandsmessung erfolgt.

## Claims

1. Method for the optical inspection of closures on containers, **characterized in that** the entire outer circumferential edge of a closure is illuminated diagonally from above and a photograph of the top side of the closure is taken perpendicularly from above, from which photograph the illuminated outer edge of the closure is established and the position of a cap logo relative to this edge is directly or indirectly checked, a signal being generated in the event of any unacceptable eccentricity.

2. Method according to Claim 1, **characterized in that** an analysis gate, which is concentric with the edge of the closure, is produced upon analysis of the photograph, the form of said gate being adapted to the respective cap logo or parts thereof.

3. Method according to Claim 2, **characterized in that** a point-by-point and/or partial circumferential and/or complete circumferential measurement is taken of the distance between the analysis gate and the cap logo or parts thereof, in particular any lettering.

## Revendications

1. Procédé de contrôle optique de fermetures de récipients,
**caractérisé en ce que**
l'arête extérieure d'une fermeture est éclairée en diagonale par le haut sur toute la périphérie et une vue de la face supérieure du système de fermeture est photographiée perpendiculairement d'en haut, ce qui permet de déterminer le bord extérieur de la fermeture apparaissant plus clair et de vérifier la position d'un logo d'opercule directement ou indirectement par rapport à ce bord, un signal étant généré dans le cas d'une excentricité inadmissible.

2. Procédé selon la revendication 1,
**caractérisé en ce qu'**
un passage d'évaluation concentrique par rapport au bord de la fermeture est généré au moment de l'évaluation de la photographie, sa forme étant adaptée au logo d'opercule respectif ou à des parties de celui-ci.

3. Procédé selon la revendication 2,
**caractérisé en ce qu'**
entre le passage d'évaluation et le logo d'opercule ou des parties de celui-ci, en particulier un graphisme, on effectue une mesure de la distance ponctuelle et/ou sur une partie de la périphérie et/ou sur toute la périphérie.
